# EUROPEAN PATENT APPLICATION

(11) **EP 4 716 016 A1**
(43) Date of publication of application: **25.03.2026**
(21) Application number: 25204151.2
(22) Date of filing: 23.09.2025
(51) Int. Cl.: H01R 4/64, H01R 4/70, B64D 45/02, H02G 15/04, H01R 11/28, H01R 4/30, H01R 4/56, H01R 11/01, H01R 11/12, F16B 33/00, F16B 37/14

(54) **PROTECTIVE CAP FOR ELECTRICAL CONNECTOR**

(30) Priority: 23.09.2024 US 202418892771
(71) Applicant: PRATT & WHITNEY CANADA CORP., Longueuil, Québec J4G 1A1 (CA)
(72) Inventor: GIRARD, Julien, (01BE5) Longueuil, J4G 1A1 (CA); SCANDELLA, Robert, (01BE5) Longueuil, J4G 1A1 (CA); KUDRNA, Richard, (01BE5) Longueuil, J4G 1A1 (CA)
(74) Representative: Dehns

(57) **Abstract**

A protective cap (10) for an electrical connector of a wire harness has a body (12) made of an electrically conductive material. The body (12) has an end wall (12a) and a sleeve (12b) projecting from a first side of the end wall (12a) around a central axis (14). The sleeve (12b) has threads for threaded engagement with corresponding threads of the electrical connector. The sleeve (12b) and the end wall (12a) defines a receptacle (12f). A grounding/bonding feature (12c) is integrated on an outer surface of the sleeve (12b) or the end wall (12a). The grounding/bonding feature is electrically connectable to an electrically conductive component to electrically protect the unmated connector.

## Description

### TECHNICAL FIELD

The invention relates generally to wire harnesses and, more particularly, to protective covers for unmated electrical connectors of such wire harnesses.

### BACKGROUND OF THE ART

Aircraft engines typically comprise wire harnesses with electrical connectors for operably connecting selected accessories to the engine. However, in some applications, not all of the electrical connectors are used. For this reason, it is desirable to provide some form of protective cover to protect the exposed contacts of the connectors when such connectors are not used.

### SUMMARY

In one aspect of the invention, there is provided a protective cap for an electrical connector (e.g., a connector having exposed contacts) of a wire harness on an aircraft engine, comprising: a body made of an electrically conductive material, the body including: an end wall; a sleeve projecting from a first side of the end wall and around a central axis, the sleeve having threads for threaded engagement with corresponding threads of the electrical connector, the sleeve and the end wall defining a receptacle, and a grounding and/or bonding feature (i.e., a feature or member which provides a grounding function and/or a bonding/connecting function) provided on an outer surface of the sleeve or the end wall, the grounding or bonding feature electrically connectable to an electrically conductive component of the aircraft engine; and a seal inside the receptacle.

In any of the aspects or embodiments described above or herein, the end wall has a second side opposite to the first side, and wherein the grounding and/or bonding feature projects axially from the second side of the end wall.

In any of the aspects or embodiments described above or herein, the grounding and/or bonding feature may be a stud having a threaded portion for engagement with a threaded fastener.

In any of the aspects or embodiments described above or herein, the end wall may have a second side opposite to the first side. The stud may extend axially from the second side of the end wall. The stud may be axially aligned with the central axis of the sleeve.

In any of the aspects or embodiments described above or herein, the stud may have a portion of reduced cross-section (e.g., a cross section taken perpendicularly to an axis of the stud) defining a locating groove around an axis of the stud at a location between the threaded portion and the end wall.

In any of the aspects or embodiments described above or herein, the end wall may have a radially outermost surface extending around the central axis. The radially outermost surface may define a polygonal shape configured for engagement with a torque applying tool.

In any of the aspects or embodiments described above or herein, the radially outermost surface may have a hexagonal configuration.

In any of the aspects or embodiments described above or herein, the grounding and/or bonding feature may be a tab projecting axially from a second side of the end wall opposite to the first side.

In any of the aspects or embodiments described above or herein, the tab may have a hole extending therethrough in a direction transversal (e.g., perpendicular) to the central axis of the sleeve.

In any of the aspects or embodiments described above or herein, the tab may be radially offset from the central axis of the sleeve.

In any of the aspects or embodiments described above or herein, the body may be made out of metal. The grounding and/or bonding feature/connection may be configured to support the wire harness on the electrically conductive component of the aircraft engine.

In another aspect of the invention, there is provided a grounding and/or bonding connection (i.e., a connection which provides a grounding function and/or a bonding function) for an aircraft engine, comprising: a wire harness having an unmated connector (e.g., a connector having exposed contacts); a protective cap (e.g., a protective cap according to any aspect or embodiments described above or herein) engaged with the unmated connector of the wire harness, the protective cap having a metallic body including: an end wall; a sleeve extending from the end wall and defining therewith a receptacle configured to receive the unmated connector; and a bonding and/or grounding member (grounding and/or bonding feature) projecting from an outer surface of the sleeve or the end wall; and a seal received in the receptacle for sealing engagement with the unmated connector of the wire harness; and an electrically conductive link between the bonding and/or grounding member (grounding and/or bonding feature) of the protective cap and a conductive component of the aircraft engine.

In any of the aspects or embodiments described above or herein, the wire harness may be supported by a metallic bracket mounted to the conductive component of the aircraft engine and attached to the bonding and/or grounding member (grounding and/or bonding feature) of the protective cap.

In any of the aspects or embodiments described above or herein, the electrically conductive link may include a metallic bracket. The bonding and/or grounding member (grounding and/or bonding feature) may support the wire harness on the metallic bracket.

In any of the aspects or embodiments described above or herein, the bonding and/or grounding member (grounding and/or bonding feature) may be a threaded stud projecting from the end wall of the protective cap.

In any of the aspects or embodiments described above or herein, the electrically conductive link may include a bonding strap attached to the threaded stud.

In any of the aspects or embodiments described above or herein, the electrically conductive link may include a metallic bracket. The threaded stud may be fastened to the metallic bracket.

In any of the aspects or embodiments described above or herein, the metallic bracket may be clamped between the end wall of the protective cap and a nut threadedly engaged with the threaded stud.

In any of the aspects or embodiments described above or herein, the threaded stud may be axially aligned with the sleeve.

In any of the aspects or embodiments described above or herein, threads may be provided on the sleeve for threaded engagement with mating threads of the unmated connector.

The term grounding, also known as earthing, is herein intended to refer to a measure of safety against electric shocks by acting as a safety line to redirect electric current in the event of short circuits.

The term bonding is herein intended to refer to the act of electrically joining two or more electrical conductors to ensure they are at the same electrical potential.

### DESCRIPTION OF THE DRAWINGS

Reference is now made to the accompanying figures in which:
Fig. 1 illustrates a protective cap installed on an unmated connector of a wire harness supported by a non-conductive support clamp, the protective cap having a grounding/bonding stud grounded or bounded to an electrically conductive component via a bonding strap or cable;
Fig. 2 illustrates the protective cap installed on the unmated connector of the wire harness but this time grounded or bonded to the electrically conductive component via an electrically conductive mounting bracket mechanically attached to the grounding/bonding stud of the cap, the cap used with the bracket to provide support to the harness and provide a conductive path;
Fig. 3 is a perspective view of the protective cap shown in Figs. 1 and 2;
Fig. 4 is a cross-section view of the protective cap shown in Fig. 3;
Fig. 5 is a perspective view of a protective cap with a grounding/bonding tab; and
Fig. 6 is a cross-section view of the protective cap shown in Fig. 5.

### DETAILED DESCRIPTION

Aircraft engines and other electronically controlled machines that must survive in a harsh electromagnetic environment (high-intensity radiated field (HIRF) & electromagnetic interference (EMI)), or be exposed to lightning direct or indirect effects, are typically equipped with a wire harness that interconnects the electronic control unit to various sensors, actuators, effectors, and the parent machine (such as a gas turbine engine is connected to an aircraft). Often, an electrical connector/receptacle is left unmated in service as for example a diagnostic connector. Such unmated connectors need to be electrically and physically protected, notably to survive EMI, HIRF and lightning.

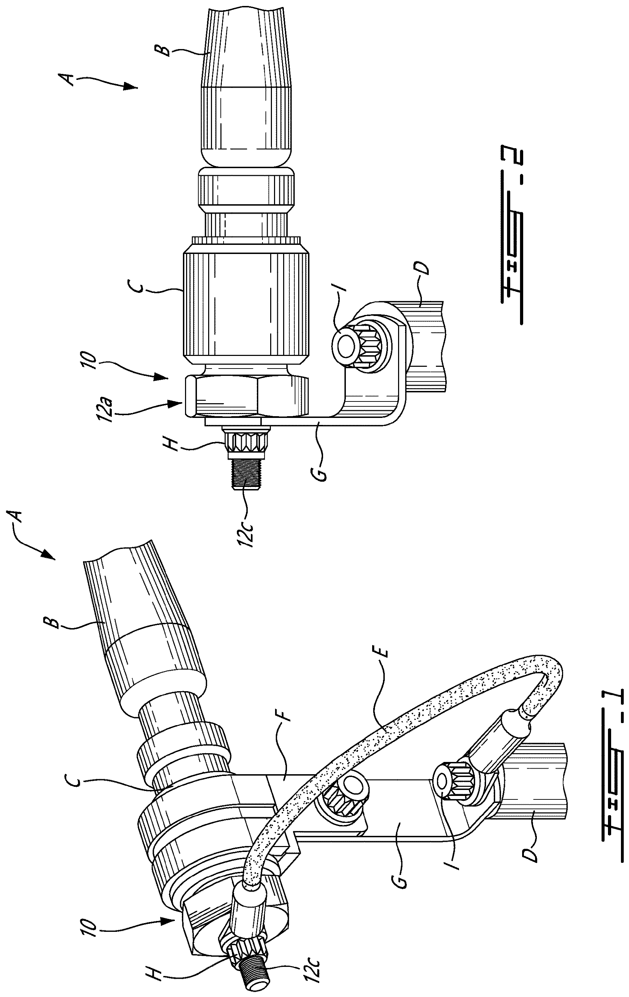

Figs. 1 and 2 illustrate a harness A having a cable B including a bundle of wires connected to an electrical connector C (e.g., electrical connector model EN2997) that is, in turn, configured for connection with a receptacle or plug of a mating connector of a piece of equipment, such as an aircraft engine accessory (e.g., a sensor, a data connecting hub, etc.), to transfer electrical power, signals or data. As illustrated in Figs. 1 and 2, a protective cap 10 having an electrically conductive body may be installed on the connector C when not in use to protect the connector C from contaminants and at the same time ground or electrically bond the unused connector C to an electrically conductive component D of the aircraft engine, for example a casing of the engine. As shown in Fig. 1, an electrically conductive link, such as a bonding strap E, may be used to create a conductive path between the cap 10 and the component D. By so using the cap 10 to electrically join the connector C to the component D, a non-conductive support clamp F, such as a high friction rubber clamp, may be used to securely mechanically mount the harness A on a metal bracket G, which is, in turn, mounted to the component D. In this example, the cap 10 is thus a multi-function component configured to protect the connector C from contamination, and damage or electrical change when the connector C is not in use. As shown in Fig. 2, the cap 10 can also be directly mounted to the bracket G to further act as a support for the harness A, thereby eliminating the need for the clamp F and the bonding strap E. In this example, the metallic bracket G is used as the electrically conductive link between the cap 10 and the component D.

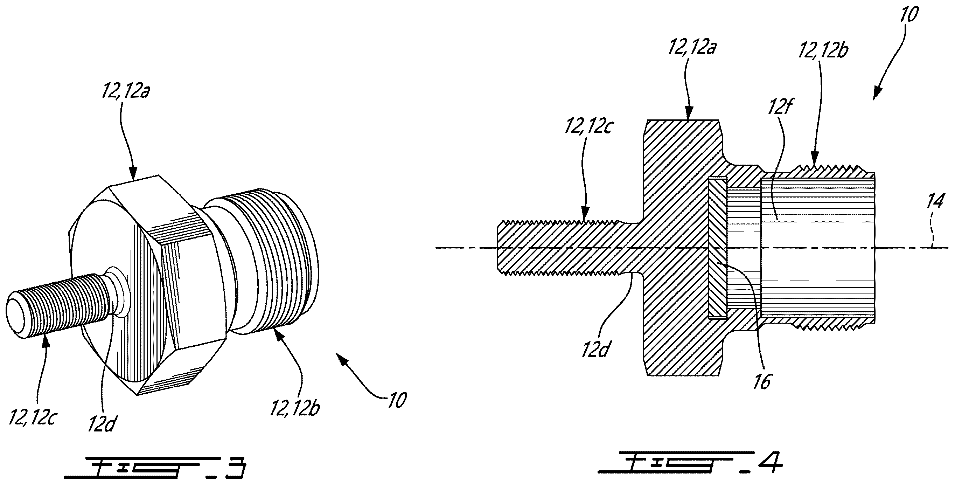

As shown in Figs. 3 and 4, the protective cap 10 generally comprises a unitary body 12 made of an electrically conductive material, such as a metallic material or the like. The unitary body 12 has an end wall 12a or head and a sleeve 12b projecting from a first side of the end wall 12a and around a central axis 14. According to some embodiments, the sleeve 12b is cylindrical and has threads for threaded engagement with corresponding threads of the electrical connector C. The threaded coupling can be used to electro-mechanically join the cap 10 to the connector C along a 360 degree interface. In the illustrated example, the threads are external threads on the outer surface of the sleeve 12b for engagement with mating internal threads of the connector C. However, it is understood that depending on the model of connector to be capped, the threads on the sleeve 12b of the cap 10 could be internal threads instead of external threads. Furthermore, in some cases, other mechanical fastening means could be used to fasten the cap 10 to the connector C. For instance, a bolted flange connection could be provided in place of the above-described threaded connection. Alternatively, a tight fit could be provided between the sleeve 12b of the cap 10 and the plug or receptacle of the connector C. According to other embodiments, a bayonet type coupling interface could be used instead of the illustrated threaded coupling interface. Also, axially extending keys features could be provided on the sleeve portion of the cap for engagement with corresponding keyways on the conductor. The skilled person will understand that various mechanical coupling means are contemplated.

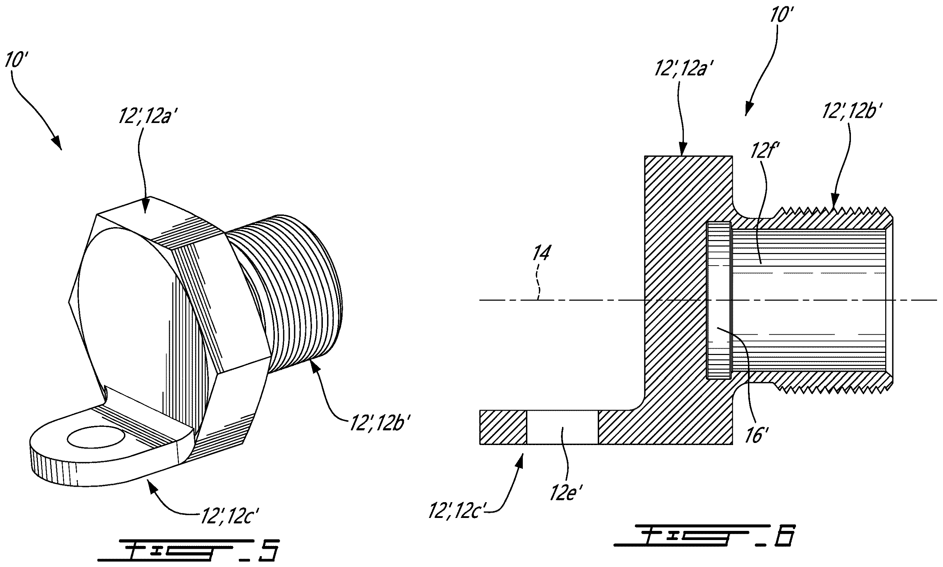

Still referring to Figs. 3 and 4, it can be appreciated that a grounding/bonding feature, a threaded stud 12c in the illustrated example, is integrated to the unitary body 12 of the cap 10 to allow for the electrical connector C to be grounded or bonded to the electrically conducting component D (e.g., the casing of the aircraft engine). While the grounding/bonding feature illustrated in Figs. 3 and 4 is provided in the form of a stud, it is understood that the grounding/bonding feature could take various forms as long as it allows for the connector C to be electrically connected to another electrically conductive component via the cap 10. For instance, as will be seen hereinafter with reference to Figs. 5 and 6, the grounding/bonding feature could be provided in the form of an eyelet or ring tab 12c'. Other features allowing the cap 10 to be electro-mechanically joined to another electrically conductive part, such as a groove or hole in the unitary body 12 of the cap 10, are contemplated as well.

Referring to Figs. 3 and 4, it can be appreciated that the grounding/bonding stud 12c projects axially from a second side of the end wall 12a opposite to the sleeve 12b. According to the illustrated example, the stud 12c is axially aligned with the central axis 14 of the sleeve 12b. This provides for a symmetrical body around the central axis 14. Such a symmetrical configuration facilitates the machining of the body 12 of the cap 10 via a simple turning operation or other known manufacturing processes. Also, by centrally forming the stud 12c along the axis 14, the position of the stud 12c remains unchanged irrespective of the angular or clocking position of the cap 10 around the axis 14. This may facilitate the installation of the cap 10 and simplify its integration in an aircraft engine environment. However, it is understood that the stud 12c could project from other outer surfaces of the end wall 12a or even the sleeve 12b of the unitary body 12.

Referring back to Fig. 1, it can be seen that a nut H can be threadedly engaged on the threaded stud 12c to secure the cap 10 to a first eyelet at a first end of the bonding strap E. The bonding strap E may be provided with a second eyelet at its opposed second end for connection to the component D or the bracket G via a mechanical fastener I, such as a bolt or a nut. The same mechanical fastener I may be used to physically attach the bracket G to the component D and to electrically connect the second end of the strap E to the component D. Alternatively, as shown in Fig. 2, the stud 12c can extend through a mounting hole defined in the upper end of the bracket G and the nut H can be used to securely mount the cap 10 to the upper end of the bracket G. The nut H can be tightened until the bracket G firmly abuts against the second side of the end wall 12a or head of the cap 10, thereby firmly clamping the bracket G between the head of the cap 10 and the nut H. According to this arrangement, the grounding/bonding stud 12c of the cap 10 is also used to provide support to the harness A. As previously mentioned, this arrangement can be used to reduce the number of interconnecting parts and to facilitate installation.

Referring back to Figs. 3 and 4, according to some embodiments, the stud 12c further includes a locating feature 12d inboard of the threads thereof, i.e., between the threads and the second side of the end wall 12a. The locating feature 12d can take the form of a region of reduced cross-section. For instance, it can be provided in the form of a groove defined in an outer diameter surface of the stud 12c. Such a groove is configured and dimensioned to act as a seat for the eyelet of the bonding strap E or the metallic bracket G as shown in Figs. 1 and 2, respectively.

Referring to Fig. 4, the cap 10 further includes a seal 16 removably received in the closed bottom end of a receptacle 12f defined by the end wall 12a and the sleeve 12b. The receptacle 12f is configured to receive the central contact portion of the connector C. The seal 16 is selected to provide an environmentally sealed interface for the unmated contacts of the connector C. The seal 16 is configured for axial sealing engagement with the connector C. The seal 16 can take various forms including a gasket. The gasket can for instance be made of silicone, neoprene, rubber or any other suitable compressible non-conductive or conductive materials. The pressure or force the seal 16 is placed under is determined by the torque applied to the threaded coupling between the cap 10 and the connector C. The torque to be applied is selected as a function of the seal pressure rating to provide a reliable and effective sealing interface between the cap 10 and the connector C. According to some installation procedures, the cap 10 may be mounted to the bracket G and a counter torque can be applied on the cap 10 by holding the same stationary with a wrench while a fastening torque is applied onto the connector C. That is the connector C can be screwed onto the cap 10 while the same is held stationary. Alternatively, the connector C can be held stationary and the cap 10 can be tightened onto the connector C. Both installation procedures can be used depending on the installation constraints. According to other embodiments, the seal 16 could be provided in the form of an O-ring mounted in an annular groove defined in an inner diameter surface of the sleeve 12b. For example, such a sealing arrangement could be used together with a tight fit coupling between the cap 10 and the connector

C.

Referring to Figs. 1-3, it can be appreciated that the end wall 12a of the unitary body 12 of the cap 10 can be provided in the form of a hexagonal head for engagement with a torque applying tool, such as a wrench. That is the end wall 12a has a radially outermost surface having a six-sided polygonal geometry for engagement with a wrench or the like. Other multi-sided polygonal shape are contemplated as well. According to other embodiments, a knurled finish could also be applied to the radially outermost surface of the end wall 12a to facilitate grasping by a torque applying tool. In such instances, the radially outermost surface of the end wall 12a or head could adopt various geometries, including circular geometries.

Turning to Figs. 5 and 6, it can be appreciated that the grounding/bonding feature can take the form of a tab 12c' integral to the electrically conductive body 12' of the cap 10'. According to the illustrated embodiment, the tab 12c' projects axially from a bottom portion of the second side of the end wall 12a'. Still according to the illustrated example, the tab 12c' extends in a direction parallel to the central axis 14 of the sleeve 12b', but is spaced radially from the central axis 14 thereof. A hole 12e' extends through the tab 12c' in a direction transversal to the axis 14 for engagement with an electrically conductive fastener or the like to allow the cap 10' to be grounded or bonded to a surrounding electrically conductive structure.

In accordance with further embodiments, a threaded cap connects to an unused electrical connector of a harness and seals to prevent moisture/contaminants from entering the connector. On the other side of the cap, a grounding stud or another grounding feature is provided to allow to either, directly support the cap on an electrically conducting bracket or use a bonding cable/strap from the stud to a bonding interface on the aircraft engine.

As described above, such a cap may provide three functions: 1) sealing/shielding the connector, from moisture/contaminants 2) providing ground path for shield terminations, and 3) providing mechanical features to secure stowed connector. Such a protective cap with bonding/grounding provisions may offer a cost and a weight advantage over commercially available caps.

According to further aspects of one or more embodiments, each harness may have one or more shields over the conductors. The harness shields have very low DC electrical resistance to the backshell of the connectors, the connector/receptacle, and the local ground. The harness shields have very low radio frequency electrical resistance to the backshell, the connector/receptacle, and the local ground. The harness circuit is designed to have the required "ampacity" to handle the required currents for the required time without damage. Shielding is thus used to reduce the amount or magnetic or radio energy that moves from the environment into the conductors, so as to avoid upset or damage or malfunction of the system.

Any element that "floats" resembles an antenna and will resonate typically at ¼ wavelength. A harness branch which is grounded at one end but floating at the other end (such as the example where a control system harness includes a ground service connector which is not mated to a grounded item when in flight), will resemble an antenna. Hence the need to ground the "floating" end (e.g., the unmated conductors of a wire harness).

When a control system harness is exposed to an extraneous moving magnetic field, or to radio energy (such as if it flies past an FM radio station antenna), any impedance will encourage voltage build up. Thus, the shields must present a low reactance against the radio frequency threat. Tubular shapes, such as woven copper mesh, offer this low reactance, as does ribbon shape. The interface from the tubular shaped woven copper mesh shield may be designed to make a "360 degree" conductive interface to the backshell of the conductor. The backshell may have a similar "360 degree" conductive interface to the connector/receptacle. The interface between the blanking/protective cap and the plug/receptacle of the unmated connector contacts in a 360-degree manner such as by touching metal to metal at the plug/receptacle entry lip. The connection between the blanking or protective cap and the local ground should not be via a fine wire, but rather a metal ribbon/strip, or crushed mesh metal tube.

The amount of required ampacity varies with the application. For instance, gas turbine engines may be struck by lightning. The lighting current passes through various parts of the engine and nacelle. The wiring harness resembles a spider or octopus spreading over the engine. In some applications, the engine may have poor conductivity across its flanges, hence the current will follow through the harness. Since the heating follows the equation "square of current x resistance", an example resistance of 0.01 Ohm gives us a heating of 6.25 MW, the material may vaporize despite the short duration. For this reason, it is desirable to have the adequate ampacity. This may be obtained via an adequate clamped area between the bond strap and protective cap. This may be achieved by having a grounding or bonding stud or tab as disclosed herein above.

Because lighting strikes involve astoundingly fast rate of voltage rise, they resemble radio frequency energy. Thus, any reactance will cause voltage buildup. For example, if a protective cap was touching only along a portion of a thread spiral, the resulting reactance could cause voltage build up. This may result in electrical arcing, which is an ignition source and causes spark erosion. Hence a blanking device or protective cap designed to have intimate 360 degree contact with the unmated conductor and a grounding or bonding member of adequate metal to metal fay (for ampacity and low resistance), and low inductance (such as achieved with a metal strap shape, or woven tube shape), is desired.

According to other embodiments, the engine control system may have an open receptacle instead of plug. As such, the protective cap could be provided as a male keyed plug or not keyed, designed to be inserted into the stationary receptacle. The protective cap could be equipped with "EMI fingers", as well as a coupling nut which is spun to engage corresponding threads on the receptacle. The plug face would include or not include an insert with required pattern to accept the pins of the stationary plug. One advantage is that with the insert the dielectric withstanding of pin to pin and pin to wall is maintained.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Indeed, various modifications could be implemented by a person of ordinary skill in the art in view of the present disclosure, which modifications would be within the scope of the present technology.

## Claims

1. A protective cap (10) for an electrical connector (C) of a wire harness on an aircraft engine, comprising:
a body (12) made of an electrically conductive material, the body (12) including:
an end wall (12a);
a sleeve (12b) projecting from a first side of the end wall (12a) and around a central axis (14), the sleeve (12b) having threads for threaded engagement with corresponding threads of the electrical connector (C), the sleeve (12b) and the end wall (12a) defining a receptacle (12f); and
a grounding or bonding feature (12c) provided on an outer surface of the sleeve (12b) or the end wall (12a), the grounding or bonding feature (12c) electrically connectable to an electrically conductive component of the aircraft engine; and
a seal (16) inside the receptacle (12f).

2. The protective cap (10) according to claim 1, wherein the end wall (12a) has a second side opposite to the first side, and the grounding or bonding feature (12c) projects axially from the second side of the end wall (12a).

3. The protective cap (10) according to claim 1, wherein the grounding or bonding feature is a stud (12c) having a threaded portion for engagement with a threaded fastener.

4. The protective cap (10) according to claim 3, wherein the end wall (12a) has a second side opposite to the first side, the stud (12c) extends axially from the second side of the end wall (12a), and the stud (12c) is axially aligned with the central axis (14) of the sleeve (12b) , and wherein the stud (12c) optionally has a portion of reduced cross-section (12d) defining a locating groove around an axis (14) of the stud (12c) at a location between the threaded portion and the end wall (12a).

5. The protective cap (10) according to any preceding claim, wherein the end wall (12a) has a radially outermost surface extending around the central axis (14), and the radially outermost surface defines a polygonal shape configured for engagement with a torque applying tool.

6. The protective cap (10) according to claim 1, wherein the grounding or bonding feature is a tab (12c') projecting axially from a second side of the end wall (12a') opposite to the first side.

7. The protective cap (10) according to claim 6, wherein the tab (12c') has a hole (12e') extending therethrough in a direction transversal to the central axis (14) of the sleeve (12b).

8. The protective cap (10) according to claim 6 or 7, wherein the tab (12c') is radially offset from the central axis (14) of the sleeve (12b).

9. The protective cap (10) according to any preceding claim, wherein the body (12) is made out of metal, and the grounding or bonding feature (12c) is configured to support the wire harness on the electrically conductive component of the aircraft engine.

10. A grounding or bonding connection for an aircraft engine, comprising:
a wire harness (A) having an unmated connector (C);
the protective cap (10) as defined in any preceding claim, the protective cap (10) engaged with the unmated connector (C) of the wire harness (A); and
an electrically conductive link (E, G) between the grounding or bonding feature of the protective cap (10) and a conductive component (D) of the aircraft engine.

11. The grounding or bonding connection of claim 10, wherein the wire harness (A) is supported by a metallic bracket (F, G) mounted to the conductive component (D) of the aircraft engine and attached to the grounding or bonding feature (12c)of the protective cap (10).

12. The grounding or bonding connection of claim 10 or 11, wherein the electrically conductive link includes a metallic bracket (G), and the grounding or bonding feature (12c) supports the wire harness (A) on the metallic bracket (G).

13. The grounding or bonding connection of any one of claims 10 to 12 when dependent upon claim 3, wherein the electrically conductive link includes a bonding strap (E) attached to the stud (12c).

14. The grounding or bonding connection of any one of claims 10 to 12 when dependent upon claim 3, wherein the electrically conductive link includes a metallic bracket (G), and the stud (12c) is fastened to the metallic bracket.

15. The grounding or bonding connection of claim 14, wherein the metallic bracket (G) is clamped between the end wall (12a) of the protective cap (10) and a nut (H) threadedly engaged with the threaded stud (12c).
